# EUROPÄISCHE PATENTSCHRIFT

(11) **EP 1 352 802 B1**
(45) Veröffentlichungstag und Bekanntmachung des Hinweises auf die Patenterteilung: **03.01.2007**
(21) Anmeldenummer: 03006693.0
(22) Anmeldetag: 26.03.2003
(51) Int. Cl.: B61G 9/08, B61G 11/12

(54) **Mittelpufferkupplungsanordnung**
Central buffer coupling device
Dispositif d'attelage à tampon central

(30) Priorität: 09.04.2002 DE 10215664
(43) Veröffentlichungstag der Anmeldung: 15.10.2003
(73) Patentinhaber: Leben, Klaus, 82335 Berg (DE)
(72) Erfinder: Leben, Klaus, 82335 Berg (DE); Starker, Bernhard, 86987 Schwabsoien (DE)
(74) Vertreter: Grättinger & Partner (GbR)

(56) Entgegenhaltungen:
- DE-A- 1 455 227
- DE-A- 2 015 016
- DE-B- 1 180 394
- DE-C- 19 918 195
- US-A- 3 596 773

## Beschreibung

Die vorliegende Erfindung betrifft eine Mittelpufferkupplungsanordnung, umfassend ein Gehäuse und eine Dämpferpatrone, mit den folgenden Merkmalen:
das Gehäuse weist einen Zylinderabschnitt und einen Anschlußabschnitt auf;
die Dämpferpatrone umfaßt als Hauptkomponenten ein Zylinderteil und einen darin axial verschiebbar geführten Hohlkolben, der endseitig aus dem Zylinderteil herausragt;
die Dämpferpatrone ist dergestalt in dem Zylinderabschnitt des Gehäuses aufgenommen, daß sich eine der Hauptkomponenten in axialer Richtung an einer Stützfläche des Gehäuses abstützt, während die andere Hauptkomponente aus dem Gehäuse herausragend in diesem axial verschiebbar geführt ist;
in einem zwischen der Dämpferpatrone und dem Zylinderabschnitt des Gehäuses bestehenden Ringraum ist eine erste Federeinheit aufgenommen;
die Dämpferpatrone umfaßt eine hydraulische Dämpfeinheit mit einem Arbeitsraum, dessen Volumen von der Stellung des Hohlkolbens relativ zum Zylinderteil abhängt und der über einen über eine Strömungsdrossel gedrosselten Strömungsweg mit einem Überströmraum in Verbindung steht, welcher in dem Hohlkolben angeordnet und mittels eines in dem Hohlkolben axial verschiebbar geführten Trennkolbens von einem Federraum abgetrennt ist;
der Arbeitsraum der hydraulischen Dämpfeinheit steht über einen Strömungsweg, welcher eine asymmetrische Drosseleinheit aufweist, mit einem Ausgleichsraum in Verbindung, dessen Volumen sich in Abhängigkeit von der Stellung des Hohlkolbens relativ zum Zylinderteil ändert, und zwar mit umgekehrtem Vorzeichen gegenüber dem Arbeitsraum, wobei die asymmetrische Drosseleinheit der Strömung des Dämpfmediums vom Ausgleichsraum zum Arbeitsraum einen erheblich größeren Widerstand entgegensetzt als der Strömung vom Arbeitsraum zum Ausgleichsraum.

Mittelpufferkupplungsanordnungen sind insbesondere bei Schienenfahrzeugen im Einsatz. Dabei ist an die aus dem Gehäuse herausragende Hauptkomponente der Dämpferpatrone ein Kuppelkopf angeschlossen. Die Dämpferpatrone dient dabei dem Abpuffern von Aufprallstößen; bei einem Aufprallstoß dringt der Hohlkolben - durch die hydraulische Dämpfeinheit gedämpft - in das Zylinderteil ein, wobei eine in dem Federraum untergebrachte, insbesondere als Gasfeder ausgeführte Federeinheit vorgespannt wird, die ihrerseits nach dem Ende des Aufprallstoßes den Hohlkolben in seine Ausgangslage zurückführt. Bei einem Anfahrstoß werden, bedingt durch einen zwischen den beiden Hauptkomponenten der Dämpferpatrone wirkenden Anschlag, die beiden Hauptkomponenten der Dämpferpatrone gemeinsam aus dem Gehäuse herausgezogen, wobei die in dem zwischen der Dämpferpatrone und dem Zylinderabschnitt des Gehäuses bestehenden Ringraum aufgenommene Federeinheit vorgespannt wird, die nach dem Ende des Anfahrstoßes die Dämpferpatrone in ihre Ausgangslage zurückführt; ist die genannte Federeinheit, wie dies im allgemeinen der Fall ist, als Anordnung einer Mehrzahl aufeinander reibender Ringfedern ausgeführt, so ist der Anfahrstoß entsprechend der Reibarbeit gedämpft.

Eine Dämpferpatrone für eine gattungsgemäße Mittelpufferkupplungsanordnung ist aus der DE 2015016 B2 bekannt. Der gedrosselte Strömungsweg zwischen dem Arbeitsraum und dem Überströmraum wird dabei gebildet durch eine Bohrung, welche in dem Boden des Hohlkolbens angeordnet ist und in welche ein Steuerstift eintaucht, der über einen Zwischenboden im Zylinderteil festgelegt ist. Parallel zu jener Bohrung sind in dem Boden des Hohlkolbens weitere Strömungskanäle angeordnet. Diesen ist jeweils eine asymmetrische Drosseleinheit in Form eines Rückschlagventils zugeordnet. Der Überströmraum und der Ausgleichsraum sind auf diese Weise identisch. In der Nullstellung der Dämpferpatrone, die diese in Abwesenheit äußerer Kräfte einnimmt, wird die Stellung der Hauptkomponente der Dämpferpatrone zueinander durch einen Anschlag definiert, welcher zwischen dem Zylinderteil und dem Hohlkolben der Dämpferpatrone wirkt und deren Länge begrenzt.

Namentlich bei solchen bekannten Mittelpufferkupplungsanordnungen, die keine asymmetrische Dämpfungscharakteristrik aufweisen, ist es von Nachteil, daß bei einem plötzlichen Lastwechsel bei einer auf Druck belasteten, teilweise eingefederten Mittelpufferkupplungsanordnung, z.B. bei einem starken Abbremsen des Zuges im Schiebebetrieb, die aus dem Gehäuse herausragende Hauptkomponente der - teilweise eingefederten - Dämpferpatrone durch die sich schlagartig entspannende zweite Federeinheit mit großer Wucht gegen die in dem zwischen der Dämpferpatrone und dem Zylinderabschnitt des Gehäuses bestehenden Ringraum aufgenommene erste Federeinheit geschleudert wird, wodurch es zu unzulässig hohen, die zuverlässige Funktion der Mittelpufferkupplungsanordnung gefährdenden Belastungen kommen kann.

Ein solcher Effekt ist bei gattungsgemäßen Mittelpufferkupplungsanordnungen, welche eine Dämpferpatrone nach der DE 2015016 B2 einsetzen, zwar abgeschwächt, nicht jedoch ausgeschaltet. Auch in weiterer Hinsicht ist die bekannte gattungsgemäße Mittelpufferkupplungsanordnung keineswegs ideal. Denn nach der DE 2015016 B2 wird die Rücklaufdämpfung über Drosselbohrungen, die bei der Stoßdämpfung als Bypaß wirken, realisiert. Das bedeutet, daß während des Stoßvorganges zusätzlich zu dem sich hubabhängig verändernden Strömungsquerschnitt des durch den Drosselstift gesteuerten Strömungswegs Bypassbohrungen vorhanden sind, die die Dämpfungskennlinie bei dynamischer Beanspruchung ungünstig beeinflussen. Bei Hubende und damit reduzierter Geschwindigkeit, im Idealfall auf 0, bleiben die Bypassbohrungen offen. Sie verhindern ein Abbremsen auf 0 km/h, da das komprimierte Gas in dem Hohlkolben nicht den gleichhohen Druck erreicht, wie der durch die Dynamik erzeugte, zur hundertprozentigen Abbremsung erforderliche, Druck im Hochdruckraum, wenn keine Bypassbohrungen vorhanden sind. Der Rücklauf wird zwar infolge des sich schließenden Rückschlagventils der Bypassbohrungen gebremst, aber nicht optimal. Bei Beginn des Rücklaufes ist die Geschwindigkeit 0, der zur Verfügung stehende Strömungsquerschnitt jedoch am kleinsten, statt am größten. Mit größer werdendem Ausfahrhub steigt der Strömungsquerschnitt an und die sich zwar reduzierende Gaskraft beschleunigt den Ausfahrvorgang. Das bedeutet, daß auch hier keine geringstmögliche Geschwindigkeit am Ende des Ausfahrhubes erreicht wird, sondern vielmehr ein harter Schlag gegen Ende des Ausfahrhubes auftritt.

Die der vorliegenden Erfindung zugrundeliegende Aufgabe besteht darin, bei einem vergleichsweise geringen technischen Aufwand den vorstehend dargestellten Nachteil bekannter gattungsgemäßer Mittelpufferkupplungsanordnungen zu mildern bzw. im Idealfall vollständig zu vermeiden.

Gelöst wird diese Aufgabenstellung gemäß der vorliegenden Erfindung dadurch, daß bei einer Mittelpufferkupplungsanordnung der eingangs angegebenen Art die asymmetrische Drosseleinrichtung, welche in dem den Arbeitsraum mit dem Ausgleichsraum verbindenden Strömungsweg angeordnet ist, in Reihe mit der Strömungsdrossel des den Arbeitsraum mit dem Überströmraum verbindenden Strömungswegs angeordnet ist. Wesentlich ist somit nach der vorliegenden Erfindung, daß eine aus dem Stand der Technik bekannte Bypass-Anordnung der asymmetrischen Drosseleinrichtung zu jener Strömungsdrossel, welche in dem den Arbeitsraum mit dem Überströmraum verbindenden Strömungsweg angeordnet ist, vermieden wird. Durch die erfindungsgemäße Reihenschaltung der beiden genannten Strömungsdrosseln ist nicht nur sicher ausgeschlossen, daß bei einem plötzlichen Lastwechsel bei einer auf Druck belasteten, teilweise eingefederten Mittelpufferkupplungsanordnung die aus dem Gehäuse herausragende Hauptkomponente der - teilweise eingefederten - Dämpferpatrone durch die sich schlagartig entspannende zweite Federeinheit mit großer Wucht gegen die in dem zwischen der Dämpferpatrone und dem Zylinderabschnitt des Gehäuses bestehenden Ringraum aufgenommene erste Federeinheit geschleudert wird. Auch gestattet die erfindungsgemäße Ausführung der Dämpferpatrone eine unabhängige optimale Steuerung der Ausfahrgeschwindigkeit gegenüber der gewünschten Bremsverzögerung bei einem dynamischen Aufprall und eine stark minimierte Ausfahrgeschwindigkeit am Ende des Ausfahrhubes. Eine im Schiebebetrieb mehr oder weniger weit eingefederte Dämpferpatrone nach der vorliegenden Erfindung federt, bedingt durch die erfindungsgemäß in Reihe zu der zweiten Strömungsdrossel angeordnete asymmetrische Drosseleinheit, bei einem Lastwechsel nicht schlagartig, sondern vielmehr nur stark gedämpft aus; die zweite Federeinheit entspannt sich nur allmählich und kann auf diese Weise nicht aktiv die aus dem Gehäuse herausragende Hauptkomponente der Dämpferpatrone gegen die erste Federeinheit schleudern.

Ein besonderer Vorteil der vorliegenden Erfindung besteht dabei darin, daß sich bestehende Mittelpufferkupplungsanordnungen mit vergleichsweise geringem technischen Aufwand zu solchen nach der vorliegenden Erfindung umrüsten lassen. Die Komponenten der umzurüstenden Mittelpufferkupplungsanordnungen können dabei weitestgehend weiterverwendet werden.

Besonders bevorzugt ist, wie dies weiter unten in größerem Detail ausgeführt wird, die sich an dem Gehäuse abstützende Hauptkomponente der Dämpferpatrone fest mit dem Gehäuse verbunden. In diesem Falle wird ergänzend zu der vorstehend erläuterten Wirkungsweise der erfindungsgemäßen Mittelpufferkupplungsanordnung auch verhindert, daß der vordere, geschobene Zugteil bei einem durch Abbremsen des hinteren, schiebenden Zugteils hervorgerufenen Lastwechsel infolge seiner Trägheit die aus dem Gehäuse herausragende Hauptkomponente ungebremst gegen die erste Federeinheit zieht. Denn die bei einer solchen schlagartigen Lastumkehr auf den Kuppelkopf der mehr oder weniger eingefederten Mittelpufferkupplungsanordnung ausgeübte Zugkraft wird über die mit dem Kuppelkopf verbundene Hauptkomponente dar Dämpferpatrone und - entsprechend der beim Ausfedern der teilweise eingefederten Dämpferpatrone durch die erfindungsgemäß vorgesehene asymmetrische Drosseleinheit bestehenden Dämpfungskraft - die mit dem Gehäuse fest verbundene Hauptkomponente der Dämpferpatrone direkt in das Gehäuse eingeleitet. Die aus dem Gehäuse herausragende, den Kuppelkopf tragende Hauptkomponente der Dämpferpatrone wird dementsprechend langsam in ihre der Nullstellung der Mittelpufferkupplungsanordnung entsprechende Lage zurückgeführt; harte Schläge der aus dem Gehäuse herausragenden Hauptkomponente der Dämpfereinheit auf die in dem zwischen der Dämpferpatrone und dem Zylinderabschnitt des Gehäuses bestehenden Ringraum aufgenommene erste Federeinheit werden dadurch zuverlässig verhindert.

Ist im Sinne der vorstehend erläuterten Weiterbildung der Erfindung die sich an dem Gehäuse abstützende Hauptkomponente der Dämpferpatrone fest mit dem Gehäuse verbunden, so ist es, anders als dies für bekannte gattungsgemäße Mittelpufferkupplungsanordnungen zutrifft, wichtig, daß die der Nullstellung der Mittelpufferkupplungsanordnung entsprechende Länge der Dämpferpatrone nicht durch einen zwischen den beiden Hauptkomponenten der Dämpferpatrone wirkenden Anschlag definiert wird, sondern allein durch ein inneres Kräftegleichgewicht, damit die Dämpferpatrone bei einem Anfahrstoß ihre Länge vergrößert und nicht, wie dies für den Stand der Technik zutrifft, als ganzes - gegen die Kraft der in dem zwischen der Dämpferpatrone und dem Zylinderabschnitt des Gehäuses bestehenden Ringraum aufgenommenen ersten Federeinheit - aus dem Gehäuse herausgezogen wird.

Eine besonders bevorzugte Weiterbildung der erfindungsgemäßen Mittelpufferkupplungsanordnung zeichnet sich dadurch aus, daß die asymmetrische Drosseleinheit ein Rückschlagventil umfaßt. Bei gesperrter Stellung jenes Rückschlagventils ist dabei im allgemeinen die Strömung des Dämpfungsmediums von dem Überströmraum in den Arbeitsraum durch eine parallel zum Rückschlagventil angeordnete Strömungsbohrung mit einem geringen Strömungsquerschnitt möglich. In diesem Falle ist die zuverlässige Funktion der erfindungsgemäßen Mittelpufferkupplungsanordnung auch bei Verwendung von relativ preisgünstigen Serienelementen sichergestellt.

Der nach der vorliegenden Erfindung wesentliche Ausgleichsraum kann von dem Überströmraum umfaßt sein. Er kann allerdings auch von diesem getrennt sein. Welche Alternative im Einzelfall zu bevorzugen ist, richtet sich nach den spezifischen Anforderungen bzw. Bedingungen.

Insbesondere dann, wenn die sich an dem Gehäuse abstützende Hauptkomponente der Dämpferpatrone nicht fest mit dem Gehäuse verbunden ist, ist gemäß einer bevorzugten Weiterbildung der Erfindung der Ausgleichsraum von dem Überströmraum umfaßt. Dabei wird besonders bevorzugt der den Arbeitsraum mit dem Überströmraum verbindende Strömungsweg der hydraulischen Dämpfeinheit von einem den Arbeitsraum durchsetzenden Steuerrohr, auf dessen Außenfläche der Hohlkolben geführt ist, begrenzt, wobei die asymmetrische Drosseleinheit an dem Steuerrohr angeordnet ist. Namentlich kann die asymmetrische Drosseleinheit dabei stirnseitig, an dem in den Überströmraum eintauchenden Ende des Steuerrohres angeordnet sein.

Gemäß einer anderen bevorzugten Ausführungsform der Erfindung ist vorgesehen, daß der Strömungsweg der hydraulischen Dämpfeinheit einen durch eine Öffnung des den Arbeitsraum begrenzenden Bodens des Hohlkolbens und einen in diese eintauchenden Steuerstift definierten Ringquerschnitt umfaßt, wobei die asymmetrische Drosseleinheit, welche ein Rückschlagventil umfassen kann, an einem in den Hohlkolben eingesetzten, den Überströmraum begrenzenden Zwischenboden angeordnet ist. Auch diese Gestaltung ist mit einem nur geringen technischen Aufwand verbunden; allerdings lassen sich bei dieser Bauweise nicht so kompakte Gestaltungen realisieren wie im Falle der zuvor erläuterten ersten Alternative.

Insbesondere wenn die sich an dem Gehäuse abstützende Hauptkomponente der Dämpferpatrone fest mit dem Gehäuse verbunden ist (s.o.), ist bevorzugt der Ausgleichsraum von dem Überströmraum getrennt. Besonders bevorzugt umfaßt der Ausgleichsraum in diesem Falle einen zwischen dem Hohlkolben und dem Zylinderteil begrenzten Ringraum. Der den Arbeitsraum mit dem Ausgleichsraum verbindende Strömungsweg stimmt dabei bereichsweise mit dem den Arbeitsraum mit dem Überströmraum verbindenden Strömungsweg überein, indem der den Arbeitsraum mit dem Ausgleichsraum verbindende Strömungsweg im Sinne der erläuterten Reihenschaltung auch über die in den den Arbeitsraum mit dem Überströmraum verbindenden Strömungsweg eingesetzte Strömungsdrossel führt.

Die vorliegende Erfindung läßt sich grundsätzlich unabhängig von der Einbaulage der Dämpferpatrone realisieren; d.h., es kommt nicht darauf an, welche der beiden Hauptkomponenten der Dämpferpatrone aus dem Gehäuse herausragt und welche sich an dem Gehäuse abstützt und ggf. fest mit diesem verbunden ist. Dies bedeutet indessen nicht, daß beide Möglichkeiten in jeder Hinsicht gleichwertig sind. So zeichnet sich eine besonders bevorzugte Weiterbildung der Erfindung dadurch aus, daß der Hohlkolben der Dämpferpatrone mit dem Gehäuse fest verbunden ist, beispielsweise indem an dem aus dem Zylinderteil herausstehenden Ende des Hohlkolbens eine Kopfplatte angeordnet ist, welche mit dem Gehäuse verschraubt ist, während der Kuppelkopf mit dem aus dem Gehäuse herausragenden Zylinderteil verbunden ist. Besonderer Vorteil dieser Ausführungsform sind die hierdurch ermöglichten besonders kompakten Bauweisen.

Im folgenden wird die vorliegende Erfindung anhand vierer in der Zeichnung veranschaulichter besonders bevorzugter Ausführungsbeispiele näher erläutert. Dabei zeigt
- Fig. 1: einen Axialschnitt durch eine erste nach der vorliegenden Erfindung ausgeführte Mittelpufferkupplungsanordnung in Nullstellung,
- Fig. 2: einen Axialschnitt durch die Dämpferpatrone einer zweiten nach der vorliegenden Erfindung ausgeführten Mittelpufferkupplungsanordnung in Nullstellung,
- Fig. 3: einen Axialschnitt durch eine dritte (oben) und eine vierte (unten) nach der vorliegenden Erfindung ausgeführte Mittelpufferkupplungsanordnung in Nullstellung,
- Fig. 4: einen Axialschnitt durch die beiden in Fig. 3 dargestellten Mittelpufferkupplungsanordnungen in eingefederter Stellung (Aufprallstoß) und
- Fig. 5: einen Axialschnitt durch die beiden in den Figuren 3 und 4 dargestellten Mittelpufferkupplungsanordnungen in ausgefederter Stellung (Anfahrstoß).

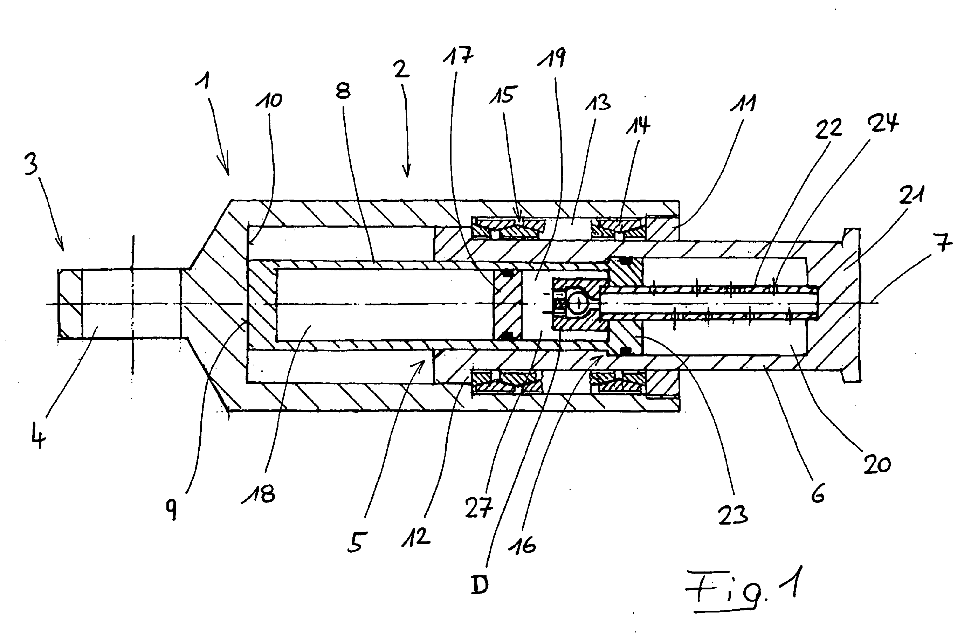

Die Mittelpufferkupplungsanordnung nach Fig. 1 umfaßt ein Gehäuse 1 mit einem Zylinderabschnitt 2 und einem Anschlußabschnitt 3. Dieser weist in als solches bekannter Weise ein zur Aufnahme eines Kugelkopfes, der ein Verschwenken des Gehäuses 1 relativ zu dem mit der Mittelpufferkupplungsanordnung ausgerüsteten Fahrzeug sowohl in einer horizontalen Ebene (Kurvenfahrt) als auch in einer vertikalen Ebene (Einfedern) gestattet, geeignetes Auge 4 auf.

In dem Gehäuse 1 ist im Bereich des Zylinderabschnitts 2 eine Dämpferpatrone 5 aufgenommen. Diese umfaßt als Hauptkomponenten ein Zylinderteil 6 und einen in diesem längs der Achse 7 verschiebbar geführten Hohlkolben 8. Der Hohlkolben 8 stützt sich mit seiner Stirnfläche 9 an der Stützfläche 10 des Gehäuses 1 ab. Das Zylinderteil 6 der Dämpferpatrone 5 ragt aus dem Gehäuse 1 heraus; es ist in dem Gehäuse 1 längs der Achse 7 verschiebbar geführt. Hierzu weist zum einen der Zylinderabschnitt 2 des Gehäuses 1 endseitig einen ringförmigen Einsatz 11 auf, an dessen radialer Innenflächen das Zylinderteil der Dämpferpatrone anliegt. Desweiteren ist das Zylinderteil 6 der Dämpferpatrone 5 in dem Gehäuse 1 mittels des an dem innenliegenden Ende des Zylinderteils vorgesehenen Bundes 12 geführt.

Zwischen dem Zylinderteil 6 der Dämpferpatrone 5 und dem Zylinderabschnitt 2 des Gehäuses 1 besteht ein Ringraum 13. In diesem ist eine aus einer Mehrzahl von Ringfedern 14 zusammengefügte erste Federeinheit 15 untergebracht. Diese stützt sich einerseits an dem ringförmigen Einsatz 11 und andererseits an dem Bund 12 des Zylinderteils 6 der Dämpferpatrone 5 ab. Wird bei einem Anfahrstoß das Zylinderteil 6 aus seiner in Fig. 1 veranschaulichten Nullstellung heraus aus dem Gehäuse 1 herausgezogen, so wird die erste Federeinheit 15 in als solches bekannter Weise axial zusammengedrückt. Dabei hebt die Stirnfläche 9 des Hohlkolbens 8 von den der Stützfläche 10 des Gehäuses 1 ab, da die Länge der Dämpferpatrone 5 infolge der in der Nullstellung aneinander anliegenden Anschläge 16 des Hohlkolbens 8 und des Zylinderteils 6 nicht über die in der Nullstellung der Mittelpufferkupplungsanordnung maßgebliche Länge hinaus vergrößert werden kann.

In dem Hohlkolben 8 ist ein Trennkolben 17 längs der Achse 7 verschiebbar geführt. Er trennt einen Federraum 18 von einem Überströmraum 19 ab, welcher - zusammen mit dem Arbeitsraum 20 - Teil der hydraulischen Dämpfeinheit der Dämpferpatrone ist. Mit dem Boden 21 des Zylinderteils 6 ist ein Steuerrohr 22 fest verbunden, welches den Boden 23 des Hohlkolbens 8 durchdringt und in den Überströmraum 19 mündet. Das Steuerrohr 22 weist in als solches bekannter Weise Durchbrüche 24 auf, durch welche hindurch Dämpfungsmedium aus dem Arbeitsraum 20 in das Innere des Steuerrohrs 22 gelangen kann. Beim Einfedern des Zylinderteils 6 der Dämpferpatrone 5 wird Dämpfmedium aus dem Arbeitsraum 20 über die Durchbrüche 24 und das Innere des Steuerrohrs 22 hindurch in den Überströmraum 19 verdrängt, wodurch der Trennkolben 17 das Volumen des Federraums 18 verringert und entsprechend die Gasfeder spannt. Bei nachlassender Kraft auf das Zylinderteil 6 der Dämpferpatrone 5 wird durch die Kraft der gespannten Gasfeder Dämpfmedium aus dem Überströmraum 19 zurück in den Arbeitsraum 20 verdrängt, wodurch die Dämpferpatrone 5 in die Nullstellung der Mittelpufferkupplungsanordnung zurückgeführt wird. Im Umfang der vorstehenden Ausführungen entspricht die Mittelpufferkupplungsanordnung nach Fig. 1 dem Stand der Technik, so daß es weiterer Erläuterungen nicht bedarf.

An die in den Überströmraum 19 hineinragende Stirnseite des Steuerrohrs 22 ist eine asymmetrische Drosseleinheit D angesetzt. Dieses öffnet bei einer Strömungsrichtung des Dämpfmediums aus dem Arbeitsraum 20 in den Überströmraum 19 hinein einen großen Strömungsquerschnitt, bei umgekehrter Strömungsrichtung indessen einen kleinen Strömungsquerschnitt. Die asymmetrische Drosseleinheit D setzt der Strömung des Dämpfmediums vom Ausgleichsraum 27, der bei dieser Ausführungsform von dem Überströmraum 19 umfaßt ist, zum Arbeitsraum 20 einen erheblich größeren Widerstand entgegen als der Strömung vom Arbeitsraum 20 zum Ausgleichsraum 27. So wird erreicht, daß eine ganz oder teilweise eingefederte Dämpferpatrone 5 nicht schlagartig, sondern vielmehr nur gedämpft in ihre der Nullstellung der Mittelpufferkupplungsanordnung entsprechende Länge zurückfedert, so daß der Bund 12 nicht infolge einer schlagartigen Entspannung der in dem Federraum 18 aufgenommenen zweiten Federeinheit mit großer Wucht gegen die Ringfeder 15 schlagen kann. Auch im Hinblick auf die Anschläge 16 wirkt sich die asymmetrische Drosseleinheit 25 materialschonend aus.

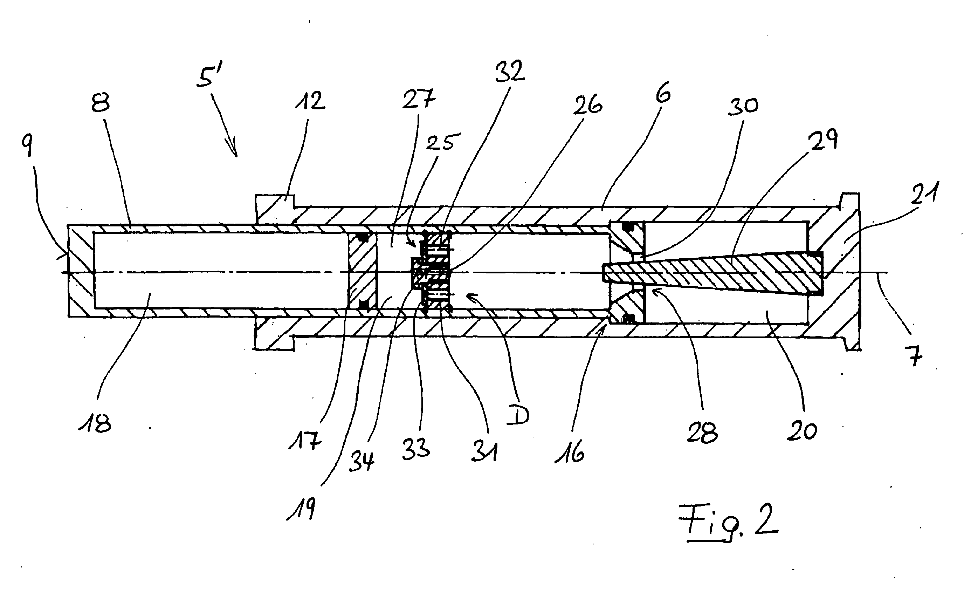

Fig. 2 veranschaulicht eine Dämpferpatrone 5', wie sie anstelle der in Fig. 1 veranschaulichten Dämpferpatrone 5 in das dort gezeigte Gehäuse 1 eingesetzt werden kann. Bei dieser Dämpferpatrone umfaßt der den Arbeitsraum 20 mit dem Überströmraum 19 verbindende Strömungsweg der hydraulischen Dämpfeinheit einen durch eine Öffnung 28 des den Arbeitsraum begrenzenden Bodens 23 des Hohlkolbens 8 und einen in diese eintauchenden Steuerstift 29 definierten Ringquerschnitt 30. Der Steuerstift 29 ist fest mit dem Boden 21 des Zylinderteils 6 verbunden, so daß sich die Fläche des Ringquerschnitts 30 in Abhängigkeit von der Stellung des Hohlkolbens 8 und des Zylinderteils 6 relativ zueinander ändert. In dem Hohlkolben 8 ist ein Zwischenboden 31 aufgenommen, in welchem eine asymmetrische Drosseleinheit D angeordnet ist. Diese umfaßt ein Rückschlagventil 25, welches seinerseits mehrere den Zwischenboden 31 durchsetzende Strömungskanäle 32 mit großem Strömungsquerschnitt umfaßt, die auf Seiten des - von dem Überströmraum 19 umfaßten - Ausgleichsraums 27 von einer Ventilplatte 33 abgedeckt sind. Eine Strömungsbohrung 26, durch welche hindurch Dämpfmedium aus dem Ausgleichsraum 27 zurück in den Arbeitsraum 20 gelangen kann, durchsetzt die Schraube 34, mittels derer die Ventilplatte 33 an dem Zwischenboden 31 fixiert ist. Die Funktion dieser Ausführungsform ergibt sich ohne weiteres aus den Erläuterungen zu der Mittelpufferkupplungsanordnung nach Fig. 1.

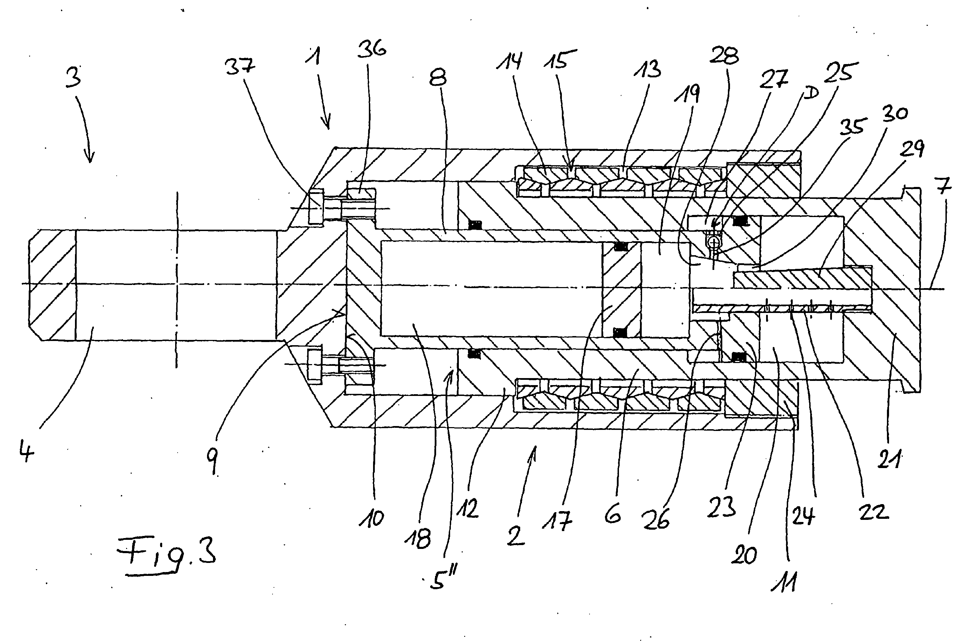

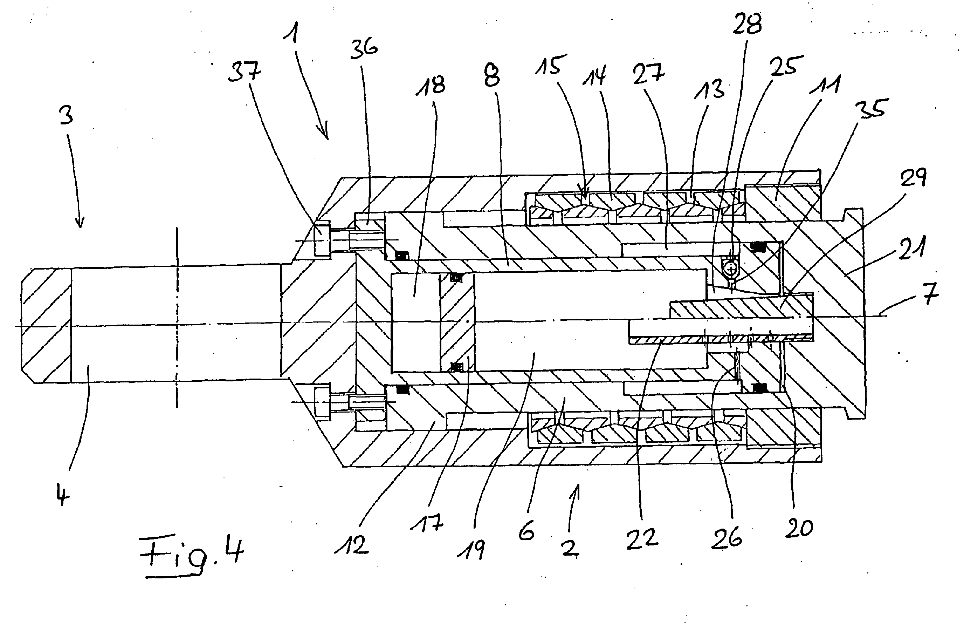

Gegenüber den Mittelpufferkupplungsanordnungen nach den Figuren 1 und 2 zeichnen sich die beiden in den Figuren 3 bis 5 veranschaulichten Ausführungsformen einer Mittelpufferkupplungsanordnung nach der Erfindung insbesondere dadurch aus, daß hier der Ausgleichsraum 27 von dem Überströmraum 19 getrennt ist. Der Ausgleichsraum 27 wird dabei begrenzt von dem Hohlkolben 8 und dem Zylinderteil 6 der Dämpferpatrone 5"; sein Volumen verändert sich mit der Stellung des Hohlkolbens 8 und des Zylinderteils 6 relativ zueinander, und zwar mit umgekehrtem Vorzeichen als das Volumen des Arbeitsraums 20. Die für die vorliegende Erfindung wesentliche asymmetrische Drosseleinheit ist dabei in den Boden 23 des Hohlkolbens 8 integriert. Sie umfaßt ein Rückschlagventil 25, welches in eine den Ausgleichsraum 27 mit der Öffnung 28 des Bodens 23 verbindende Bohrung 35 eingesetzt ist und - beim Einfedern des Zylinderteils 6 (vgl. Fig. 4) - Dämpfmedium ungehindert aus dem Arbeitsraum 20 über die Öffnung 28 und die Bohrung 35 in den Ausgleichsraum 27 gelangen läßt, in umgekehrter Richtung hingegen schließt. Beim Ausfedern des Zylinderteils 6 aus seiner eingedrückten Stellung in die Nullstellung gelangt Dämpfmedium aus dem Ausgleichsraum 27 in den Arbeitsraum 20 nur über die Strömungsbohrung 26 mit kleinem Strömungsquerschnitt.

Ersichtlich läßt sich der in den Figuren 3 bis 5 veranschaulichte Aufbau der Mittelpufferkupplungsanordnung unabhängig davon realisieren, ob zur Steuerung der Dämpfungswirkung der hydraulischen Dämpfungseinrichtung der Dämpferpatrone 5" ein Steuerstift 29 (obere Hälfte der Zeichnung) oder aber ein Steuerrohr 22 (untere Hälfte der Zeichnung) eingesetzt wird.

Stirnseitig ist an dem Hohlkolben 8 eine Kopfplatte 36 angeordnet. Diese ist mittels der Schrauben 37 mit dem Gehäuse 1 fest verbunden. Werden bei ganz oder teilweise eingefedertem Zylinderteil 6 der Dämpferpatrone 5" bei einer plötzlichen Lastumkehr Zugkräfte auf das Zylinderteil 6 ausgeübt, so werden diese über das in dem Ausgleichsraum 27 eingeschlossene Dämpfmedium, welches über die Strömungsbohrung 26 nur allmählich in den Arbeitsraum 20 zurück verdrängt wird, auf den Hohlkolben 8 übertragen und von diesen direkt in das Gehäuse 1 eingeleitet.

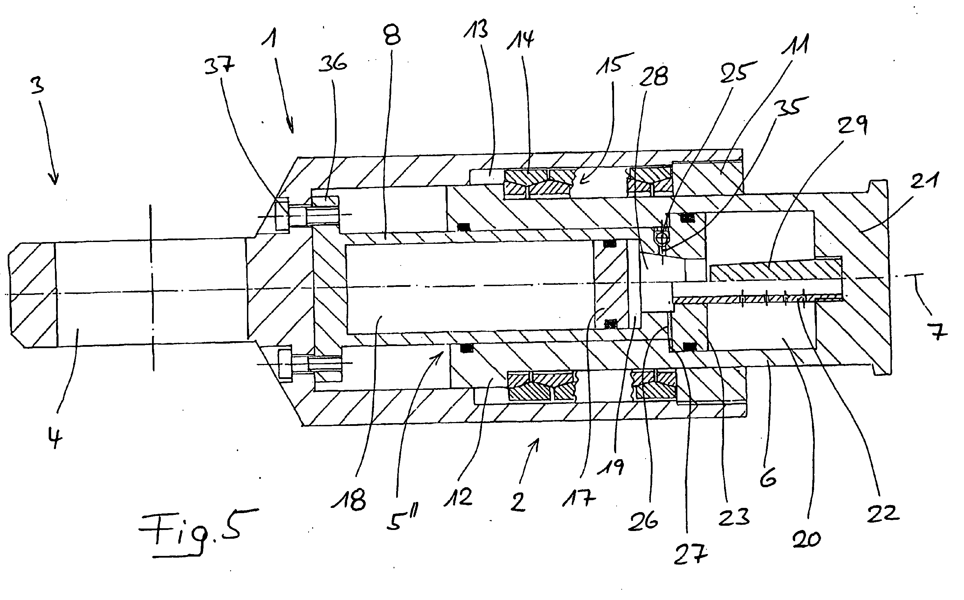

Zu beachten ist, daß bei der in die Mittelpufferkupplungsanordnung nach den Figuren 3 bis 5 eingebauten Dämpferpatrone 5" die Lage des Hohlkolbens 8 und des Zylinderteils 6 der Dämpferpatrone in der Nullstellung der Mittelpufferkupplungsanordnung (vgl. Fig. 3) nicht, wie im Falle der Mittelpufferkupplungsanordnung nach den Figuren 1 und 2, durch Anschläge definiert ist, da solche Anschläge verhindern würden, daß das Zylinderteil 6 bei einem Anfahrstoß unter Kompression der Federeinheit 15 aus dem Gehäuse herausgezogen wird (vgl. Fig. 5). Vielmehr wird hier die Nullstellung der Mittelpufferkupplungsanordnung definiert durch ein inneres Kräftegleichgewicht zwischen der in dem Federraum 18 eingeschlossenen Gasfeder einerseits und der in dem Ringraum 13 zwischen dem Zylinderabschnitt 2 des Gehäuses 1 und dem Zylinderteil 6 der Dämpferpatrone 5" aufgenommenen Federeinheit 15 andererseits.

Im Hinblick auf Figuren 1 bis 5 ist abschließend noch anzumerken, daß diese nur die für die vorliegende Erfindung maßgeblichen Merkmale veranschaulichen. Weitere besondere Gestaltungsmerkmale wie beispielsweise Verdrehsicherungen der einzelnen Bauteile zueinander, Dichtungen, Gleithülsen und dergleichen sind nicht dargestellt; sie sind entsprechend den Anforderungen vorzusehen.

## Patentansprüche

1. Mittelpufferkupplungsanordnung, umfassend ein Gehäuse (1) und eine Dämpferpatrone (5, 5', 5''), mit den folgenden Merkmalen:
das Gehäuse (1) weist einen Zylinderabschnitt (2) und einen Anschlußabschnitt (3) auf;
die Dämpferpatrone (5, 5', 5'') umfaßt als Hauptkomponenten ein Zylinderteil (6) und einen darin axial verschiebbar geführten Hohlkolben (8), der endseitig aus dem Zylinderteil herausragt;
die Dämpferpatrone (5, 5', 5'') ist dergestalt in dem Zylinderabschnitt (2) des Gehäuses (1) aufgenommen, daß sich eine der Hauptkomponenten in axialer Richtung an einer Stützfläche (10) des Gehäuses (1) abstützt, während die andere Hauptkomponente aus dem Gehäuse herausragend in diesem axial verschiebbar geführt ist;
in einem zwischen der Dämpferpatrone (5, 5', 5'') und dem Zylinderabschnitt (2) des Gehäuses (1) bestehenden Ringraum (13) ist eine erste Federeinheit (15) aufgenommen;
die Dämpferpatrone (5, 5', 5'') umfaßt eine hydraulische Dämpfeinheit mit einem Arbeitsraum (20), dessen Volumen von der Stellung des Hohlkolbens (8) relativ zum Zylinderteil (6) abhängt und der über einen über eine Strömungsdrossel (24,30) gedrosselten Strömungsweg mit einem Überströmraum (19) in Verbindung steht, welcher in dem Hohlkolben (8) angeordnet und mittels eines in dem Hohlkolben axial verschiebbar geführten Trennkolbens (17) von einem Federraum (18) abgetrennt ist;
der Arbeitsraum (20) der hydraulischen Dämpfeinheit steht über einen Strömungsweg, welcher eine asymmetrische Drosseleinrichtung (D) aufweist, mit einem Ausgleichsraum (27) in Verbindung, dessen Volumen sich in Abhängigkeit von der Stellung des Hohlkolbens (8) relativ zum Zylinderteil (6) ändert, und zwar mit umgekehrtem Vorzeichen gegenüber dem Arbeitsraum (20), wobei die asymmetrische Drosseleinrichtung (D) der Strömung des Dämpfmediums vom Ausgleichsraum (27) zum Arbeitsraum (20) einen erheblich größeren Widerstand entgegensetzt als der Strömung vom Arbeitsraum (20) zum Ausgleichsraum (27);
**dadurch gekennzeichnet,**
**daß** die asymmetrische Drosseleinrichtung (D), welche in dem den Arbeitsraum (20) mit dem Ausgleichsraum (27) verbindenden Strömungsweg angeordnet ist, in Reihe mit der Strömungsdrossel (24,30) des den Arbeitsraum (20) mit dem Überströmraum (19) verbindenden Strömungswegs angeordnet ist.

2. Mittelpufferkupplungsanordnung nach Anspruch 1,
**dadurch gekennzeichnet,**
**daß** die asymmetrische Drosseleinheit ein Rückschlagventil (25) umfaßt.

3. Mittelpufferkupplungsanordnung nach Anspruch 1 oder Anspruch 2,
**dadurch gekennzeichnet,**
**daß** der Ausgleichsraum (27) von dem Überströmraum (19) umfaßt ist, wobei die asymmetrische Drosseleinheit (D) an einem in den Hohlkolben (8) eingesetzten, den Überströmraum (19) begrenzenden Zwischenboden (31) angeordnet ist.

4. Mittelpufferkupplungsanordnung nach Anspruch 3,
**dadurch gekennzeichnet,**
**daß** der den Arbeitsraum (20) mit dem Überströmraum (19) verbindende Strömungsweg der hydraulischen Dämpfeinheit einen durch eine Öffnung (28) des den Arbeitsraum begrenzenden Bodens (23) des Hohlkolbens (8) und einen in diese eintauchenden Steuerstift (29) definierten Ringquerschnitt (30) umfaßt.

5. Mittelpufferkupplungsanordnung nach Anspruch 1 oder Anspruch 2,
**dadurch gekennzeichnet, daß**
der Ausgleichsraum (27) von dem Überströmraum (19) getrennt ist, indem er einen zwischen dem Hohlkolben (8) und dem Zylinderteil (6) begrenzten Ringraum umfaßt.

6. Mittelpufferkupplungsanordnung nach Anspruch 5,
**dadurch gekennzeichnet, daß**
der den Arbeitsraum (20) mit dem Ausgleichsraum (27) verbindende Strömungsweg bereichsweise mit dem den Arbeitsraum (20) mit dem Überströmraum (19) verbindenden Strömungsweg übereinstimmt.

7. Mittelpufferkupplungsanordnung nach einem der Ansprüche 1 bis 6,
**dadurch gekennzeichnet, daß**
die sich an dem Gehäuse (1) abstützende Hauptkomponente der Dämpferpatrone (5'') fest mit dem Gehäuse (1) verbunden ist.

8. Mittelpufferkupplungsanordnung nach Anspruch 7,
**dadurch gekennzeichnet, daß**
der Hohlkolben (8) der Dämpferpatrone (5'') mit dem Gehäuse (1) fest verbunden ist.

9. Mittelpufferkupplungsanordnung nach Anspruch 8,
**dadurch gekennzeichnet, daß**
an dem aus dem Zylinderteil (6) herausstehenden Ende des Hohlkolbens (8) eine Kopfplatte (36) angeordnet ist, welche mit dem Gehäuse (1) verschraubt ist.

10. Mittelpufferkupplungsanordnung nach einem der
Ansprüche 1 bis 9,
**dadurch gekennzeichnet,**
**daß** die Dämpferpatrone (5'') keinen die Nullstellung der Mittelpufferkupplungsanordnung bei Abwesenheit äußerer Kräfte definierenden, zwischen den Hauptkomponenten der Dämpferpatrone wirkenden, die Länge der Dämpferpatrone auf das in der Nullstellung der Mittelpufferkupplungsanordnung bestehende Maß begrenzenden Anschlag aufweist.

## Claims

1. Central buffer coupling arrangement, comprising a housing (1) and a damper cartridge (5, 5' ,5''), with the following characteristics:
the housing (1) comprises a cylinder section (2) and a connecting section (3);
the damper cartridge (5, 5', 5'') comprising a cylinder part (6) and a hollow piston (8) axially displaceable within the same as its main components, the same projecting from the cylinder part with its end;
the damper cartridge (5, 5', 5") is received into the cylinder section (2) of the housing (1) in such a way that one of the main components is supported in an axial direction on a supporting surface (10) of the housing (1), whilst the other main component projects from the housing and
is axially displaceably held within the same;
a first spring unit (15) is received into an annular space (13) located between the damper cartridge (5, 5', 5 ") and the cylinder section (2) of the housing (1);
the damper cartridge (5, 5', 5") comprises a hydraulic damper unit with a working chamber (20) whose volume depends on the position of the hollow piston (8) in relation to the cylinder part (6), and which is connected via a flow path throttled by means of a flow throttle (24, 30) with an overflow chamber (19) which is located in the hollow piston (8) and separated from a spring chamber (18) by means of an axially displaceable separating piston (17) held within the hollow piston;
the working chamber (20) of the hydraulic damper means is connected with a balancing chamber (27) via a flow path which comprises an asymmetric throttle means (D), the volume of which will change depending on the position of the hollow piston (8) in relation to the cylinder part (6), namely in a reverse way to the working chamber (20), whereby the asymmetric throttle means (D) places a substantially large resistance against the flow of the lamper medium from the balancing chamber (27) to the working chamber (20) then against the flow from the working chamber (20) to the balancing chamber (27), **characterised in that** the asymmetric throttle means (D) which is located in the flow path connecting the working chamber (20) with the balancing chamber (27) is positioned in-line with the flow throttle (24, 30) of the flow path connecting the working chamber (20) with the overflow chamber (19).

2. Central buffer coupling arrangement according to Claim 1, **characterised in that** the asymmetric throttle unit comprises a non-return valve (25).

3. Central buffer coupling arrangement according to Claim 1 or Claim 2, **characterised in that** the balancing chamber (27) is enclosed by the overflow chamber (19), whereby the asymmetric throttle unit (D) is located in an interim floor (31) delimiting the overflow chamber (19) inserted into the hollow piston (8).

4. Central buffer coupling arrangement according to Claim 3, **characterised in that** the flow path of the hydraulic damper unit connecting the working chamber (20) with the overflow chamber (19) comprises a floor (23) of the hollow piston (8) delimited by an opening (28) of the working chamber, and a defined annular cross-section (30) of a control pin (29) submersed into the same.

5. Central buffer coupling arrangement according to Claim 1 or Claim 2, **characterised in that** the balancing chamber (27) is separated from the overflow chamber (19) **in that** the same comprises a delimited annular space between the hollow piston (8) and the cylinder part (6).

6. Central buffer coupling arrangement according to Claim 5, **characterised in that** the flow path connecting the working chamber (20) with the balancing chamber (27) partially overlaps the flow path connecting the working chamber (20) with the overflow chamber (19).

7. Central buffer coupling arrangement according to one of the Claims 1 to 6, **characterised in that** the main component of the damper cartridge (5") supported by the housing (1) is firmly connected with the housing (1).

8. Central buffer coupling arrangement according to Claim 7, **characterised in that** the hollow piston (8) of the damper cartridge (5") is firmly connected with the housing (1).

9. Central buffer coupling arrangement according to Claim 8, **characterised in that** a header plate (36) is located at the end of the hollow piston (8) that projects from the cylinder part (6), which is screwed to the housing (1).

10. Central buffer coupling arrangement according to one of the Claims 1 to 9, **characterised in that** the damper cartridge (5 ") does not comprise an abutment defining the zero position of the central buffer coupling arrangement in the absence of external forces acting between the main components of the damper cartridge and limiting the length of the damper cartridge to the dimension of the zero position of the central buffer coupling arrangement.

## Revendications

1. Dispositif d'attelage à tampon central comprenant un boîtier (1) et une cartouche amortisseuse (5, 5', 5") et présentant les caractéristiques suivantes :
- le boîtier (1) possèdee une partie cylindrique (2) et une partie de raccordement (3) ;
- la cartouche amortisseuse (5, 5', 5") comprend comme composants principaux une partie cylindrique (6) et, pouvant coulisser axialement dans celle-ci, un piston creux (8) avec son extrémité dépassant la partie cylindrique ;
- la cartouche amortisseuse (5, 5', 5") est logée dans la partie cylindrique (2) du boîtier (1), de manière qu'un des composants principaux s'appuie en direction axiale sur une portée d'appui (10) du boîtier (1), tandis que l'autre composant principal dépasse le boîtier en pouvant coulisser axialement dans celui-ci ;
- dans une chambre annulaire comprise entre la cartouche amortisseuse (5, 5', 5") et la partie cylindrique (2) du boîtier (1) est logée une première unité élastique (15) ;
- la cartouche amortisseuse (5, 5', 5'') comprend une unité hydraulique d'amortissement avec une chambre de travail (20) dont le volume dépend de la position relative du piston creux (8) et de la partie cylindrique (16), et qui est reliée par l'intermédiaire d'un parcours d'écoulement équipé d'un étranglement d'écoulement (24, 30), à une chambre de décharge (19) disposée dans le piston creux (8) et séparée d'une chambre élastique (18) par un piston séparateur (17) coulissant axialement dans le piston creux ;
- la chambre de travail (20) de l'unité hydraulique d'amortissement est en liaison par l'intermédiaire d'un parcours d'écoulement comportant une unité d'étranglement asymétrique (D), avec une chambre d'équilibrage (27) dont le volume varie en fonction de la position relative du piston creux (8) et de la partie cylindrique (6), et cela avec un signe opposé par rapport à la chambre de travail (20), l'unité d'étranglement asymétrique (D), opposant à l'écoulement du fluide amortisseur passant de la chambre d'équilibrage (27) à la chambre de travail (20) une résistance nettement supérieure à celle qu'il oppose à l'écoulement allant de la chambre de travail (20) à la chambre d'équilibrage (27),
**caractérisé en ce que** le dispositif asymétrique d'étranglement (D), situé sur le trajet d'écoulement reliant la chambre de travail (20) à la chambre d'équilibrage (27) est monté en série avec le parcours d'écoulement reliant l'étranglement d'écoulement (24, 30) situé sur le trajet d'écoulement reliant la chambre de travail (20) à la chambre d'équilibrage (19).

2. Dispositif d'attelage à tampon central selon la revendication 1, **caractérisé en ce que** l'unité d'étranglement asymétrique comprend une soupape anti-retour (25).

3. Dispositif d'attelage à tampon central selon la revendication 1 ou 2, **caractérisé en ce que** la chambre d'équilibrage (27) est englobée dans la chambre de décharge (19) et l'unité d'étranglement asymétrique (D) est montée sur un fond intermédiaire (13) appartenant au piston creux (8) et délimitant la chambre de décharge.

4. Dispositif d'attelage à tampon central selon la revendication 3, **caractérisé en ce que** le parcours d'écoulement de l'unité hydraulique d'amortissement reliant la chambre de travail (20) à la chambre de décharge (19) présente une section transversale annulaire (30) définie par une ouverture (28) percée dans le fond (23) du piston creux (8) délimitant la chambre de travail et par la section définie par une broche de commande (29) plongeant dans cette ouverture.

5. Dispositif d'attelage à tampon central selon la revendication 1 ou 2, **caractérisé en ce que** la chambre d'équilibrage (27) est séparée de la chambre de décharge (19) et comprend une chambre annulaire délimitée par le piston creux (8) et la partie cylindrique (6).

6. Dispositif d'attelage à tampon central selon la revendication 5, **caractérisé en ce que** le parcours d'écoulement reliant la chambre de travail (20) à la chambre d'équilibrage (27) correspond localement au parcours d'écoulement reliant la chambre de travail (20) à la chambre de décharge (19).

7. Dispositif d'attelage à tampon central selon une des revendications 1 à 6, **caractérisé en ce que** le composant principal de la cartouche amortisseuse (5") qui s'appuie sur le boîtier (1) est solidaire du boîtier (1).

8. Dispositif d'attelage à tampon central selon la revendication 7, **caractérisé en ce que** le piston creux (8) de la cartouche amortisseuse (5") est solidaire du boîtier (1).

9. Dispositif d'attelage à tampon central selon la revendication 8, **caractérisé en ce que** sur l'extrémité du piston creux (8) dépassant la partie cylindrique (6), est montée une plaque de tête (36) fixée par des vis au boîtier (12).

10. Dispositif d'attelage à tampon central selon une des revendications 1 à 9, **caractérisé en ce que** la cartouche amortisseuse (5") ne présente aucune butée définissant la position zéro du dispositif d'attelage à tampon central en l'absence de forces extérieures, agissant entre les composants principaux de la cartouche amortisseuse et limitant la longueur de cette cartouche à la mesure qui est la sienne quand le dispositif d'attelage à tampon central est à la position zéro.
